# EUROPÄISCHE PATENTSCHRIFT

(11) **EP 0 890 080 B1**
(45) Veröffentlichungstag und Bekanntmachung des Hinweises auf die Patenterteilung: **06.12.2006**
(21) Anmeldenummer: 97922814.5
(22) Anmeldetag: 25.03.1997
(51) Int. Cl.: G01C 21/20

(54) **VERFAHREN ZUR ROUTENPLANUNG UND ZIELFÜHRUNG VON FAHRZEUGEN**
METHOD OF PLANNING THE ITINERARY AND GUIDING OF VEHICLES
PROCEDE POUR PLANIFIER L'ITINERAIRE DE VEHICULES ET GUIDER CES DERNIERS

(30) Priorität: 26.03.1996 DE 19611915
(43) Veröffentlichungstag der Anmeldung: 13.01.1999
(73) Patentinhaber: T-Mobile Deutschland GmbH, 53227 Bonn (DE)
(72) Erfinder: GÜNTHER, Bernd, D-53859 Niederkassel (DE); MERTENS, Reinhold, 91207 Lauf an der Pegnitz (DE); FÄRBER, Berthold, D-85625 Glonn (DE); KÜNZEL, Roland, D-82178 Puchheim (DE)
(74) Vertreter: Riebling, Peter
(86) Internationale Anmeldenummer: PCT/DE1997/000606
(87) Internationale Veröffentlichungsnummer: WO 1997/036148

(56) Entgegenhaltungen:
- EP-A- 0 697 580
- WO-A-90/02391
- WO-A-95/21435
- WO-A-96/00373
- DE-A- 4 300 927

## Beschreibung

Die vorliegender Erfindung befaßt sich mit einem Verfahren zur Routenplanung und Zielführung von Fahrzeugen aller Art.

Bekannte Zielführungssysteme sind sehr komplex, und daher die Anforderungen an Software und Hardware sehr hoch. Es sind aufwendige Installationen an Fahrzeugen und Leitstellen notwendig, was die Anwendung für "jedermann" aus Kostengründen unattraktiv macht.

Benötigt wird, neben einer genauen Positionsbestimmung und einer genauen Definition des Zielortes, ein in einer fahrzeuginternen Datenbank abgespeichertes Wegenetz, wobei für eine dynamische Zielführung zusätzliche Informationen über Verkehrsaufkommen, Verkehrsstörungen usw. benötigt werden. Gerade die genaue Definition des Zielortes ist bei bekannten Zielführungssystemen nur unbefriedigend gelöst, da die Bestimmung des Zielorts über eine Eingabe der Zieladresse, z.B. Ort, Straße, Hausnummer, im Endgerät erfolgt. Dies ist für den Benutzer mit einer manchmal langwierigen Eingabeprozedur verbunden und setzt eine lückenlose Erfassung aller Ortsnamen und Straßennamen voraus.
Weiterhin wird ein flächendeckendes, leistungsfähiges drahtloses terrestrisches oder Satelliten-Kommunikationsnetz vorausgesetzt.

Die WO -A-95121435 beschreibt ein Informationssystem zur Routenanfrage und Zielführung von Fahrzeugen unter Anwendung des Ortungsverfahrens GPS und einer elektronischen Straßenkarte. Die elektronische Straßenkarte enthält Angaben über Wege uns Straßen und ist in einer Datenbank einer Zentrale gespeichert, In der Zentrale ist ferner ein Routenplaner angesiedelt, wobei ein Mobilfunksystem zur Datenübermittlung zwischen Zentrale und Fahrzeug verwendet wird. Über dieses Mobilfunksystem wird ferner die Startposition des Fahrzeugs und das gewünschte Fahrtziel an vom Fahrzeug an die Zentrale übermittelt.

Aus der Nachrichtentechnischen Zeitschrift ntz, Band 36 (1983), Heft 4; Seiten 220 - 223; Alois Fuchs et al.: "EVA - Netzabbildung und Routensuche für ein fahrzeugautonomes Ortungs- und Navigationssystem" ist es bekannt, ein Fahrzeug mit einem autonomen Navigations- und Zielführungssystem zu versehen. Das Fahrzeug besitzt einen Rechner, der eine elektronische Abbildung des Straßennetzes enthält. Anhand eines Ortungssystems und der elektronischen Straßenkarte kann der Rechner nach Eingabe des Fahrtziels die Routenplanung durchführen und auf einer Anzeige darstellen.

Die WO-A-90/02391 betrifft ein Verfahren zur Routenberechung zwischen zwei Standorten, mit einer zentralen Datenverarbeitungseinheit, in welcher eine Straßenkarte in elektronischer Form gespeichert ist. Der Benutzer im Fahrzeug kann die geographische Position des Ausgangs- und des Zielortes an einem Terminal eingeben. Diese Informationen werden an die Zentrale übertragen. Die Zentrale ermittelt anhand der elektronischen Straßenkarte die günstigste Fahrtroute und teilt diese dem Benutzer z.B. durch optische Anzeige mit.

Die Schrift Bosch Technische Berichte 8, (1986), 1/2, Seiten 7 -14, E.-P. Neukirchner et al.: "EVA - Ein autarkes Ortungs- und Navigationssystem für Landfahrzeuge" offenbart das bereits weiter oben in Verbindung mit der Nachrichtentechnischen Zeitschrift ntz, Band 36 (1983), Heft 4 diskutierte fahrzeugautonome Ortungs- und Navigationssystem EVA.

Aufgabe der vorliegenden Erfindung ist es, ein Verfahren zur Routenanfrage- und Zielführung von Fahrzeugen vorzuschlagen, welches möglichst weitgehend bereits eingeführte und standardisierte Mobilkommunikationstechnologien für Infrastruktur und Mobilstationen nutzt und kostengünstig und Massenmarktfähig ist, möglichst benutzerfreundlich und unter möglichst geringer Belastung des Netzes, und daher weitgehend auf einem autarken Ortungsverfahren basiert.

Gelöst wird diese Aufgabe durch die technische Lehre des Patentanspruch 1.

Das Zielführungssystem setzt sich aus mehreren Subsystemen zusammen wobei das Mobilfunkendgerät als eines von mehreren Geräten in das Verkehrstelematik-Endgerät integriert ist oder an diesem angeschlossen ist. Das Zielführungssystem kann in ein Anwendungspaket für mehrere Verkehrstelematik-Dienste direkt integriert werden.

Ein im Fahrzeug installiertes satellitengestütztes Navigations- und Ortungssystem berechnet laufend die aktuelle Position und Fahrt- bzw. Flugrichtung des Fahrzeuges und ermittelt der Zentrale unter anderem die Startposition, die wichtig ist, um einen Routenplan zu erstellen. Die ermittelte Startposition und Richtung wird an eine Dienstezentrale weitergegeben. Zur Ermittlung der Startposition und -richtung wird die "Spur", d.h. die Positions- und Richtungsdaten der zurückgelegten Wegstrecke, herangezogen. Diese wird ständig aktualisiert und in einem nicht-flüchtigen Speicher abgelegt.

Die Zielführung arbeitet auf Basis einer Wegepunktsnavigation, d.h. dem Verkehrswegeverlauf und den Abzweigungsstellen werden Wegepunkte zugeordnet, welche den Verkehrswegeverlauf eindeutig definieren und sich in einer Datenbank leicht und effizient abspeichem lassen. Daher eignet sich das erfindungsgemäße Verfahren neben Landfahrzeugen grundsätzlich auch für Luft- und Wasserfahrzeuge. Kennzeichnend ist, daß die Ermittlung der Fahrtroute "auf Anfrage" über ein Mobilkommunikationssystem durch eine Dienstezentrale erfolgt. Dies könne auch für Luft- und Schiffahrtsanwendungen eine attraktive Lösung darstellen.

Das gewünschte Fahrtziel wird in bevorzugter Weise vom Teilnehmer indirekt über eine einem Zielort zugeordnete Rufnummer eines Kommunikationsnetzes vorgegeben. Die Nummer kann direkt in das Tastenfeld eines zum Mobilfunknetz kompatiblen Endgerätes eingegeben werden, weiches diese darauf zur Dienstezentrale überträgt. Die Datenübertragung erfolgt regulär unter Ausnutzung der im Mobilfunknetz standardisierten und festgelegten Möglichkeiten. In der Dienstezentrale wird aus der Rufnummer die Zielkoordinate des Fahrtziels berechnet. Der Vorteil dieser Form von Zieleingabe besteht darin, daß der Benutzer lediglich eine relativ kurze Ziffernfolge eingeben muß - gegenüber einer vollständigen Adresse, wie es bei bekannten Zielführungssystemen vorgesehen ist -, wobei die dem Zielort zugeordnete Rufnummer in der Regel genauer bekannt ist als die vollständige Adresse und es weniger Fehlangaben und Probleme mit unterschiedlichen Darstellungsvarianten gibt. Außerdem kann so die Mobilität der Zieladresse berücksichtigt werden, z.B. Umzug des Zielteilnehmers, oder Unterscheidung zwischen Büro, Mobil, und Heim. In der Zentrale wird folglich, zumindest aus diesem Grunde, keine komplette Adressdatenbank benötigt, die bei Eingabe des Zielortes jeweils durchsucht werden müßte, sondern es müssen nur die Zielrufnummern gespeichert sein denen direkt eine Zielkoordinate zugeordnet ist, wobei beispielsweise auch nur diese Zielkoordinate zusammen mit der Rufnummer in der Datenbank gespeichert werden muß.

Die Dienstezentrale ermittelt aus der Start- und Zielkoordinate eine mögliche Fahrtroute, welche zudem nach voreingestellten Optimierungskriterien, wie z.B. Fahrzeit, Länge der Route, Sehenswürdigkeiten, Verkehrsbehinderungen usw., erstellt werden kann.

Auf einem Display, in gedruckter oder in akustischer Form kann der Benutzer sich die ermittelte Route anzeigen lassen und diese entweder annehmen oder ablehnen. Bei Ablehnung wird eine alternative Route vorgeschlagen. Wird die Route angenommen, so wird der Benutzer Schritt für Schritte zu seinem gewünschten Ziel geleitet.

In der Dienstezentrale ist der gesamte nationale und/oder internationale Verkehrswegeverlauf in Form eines Graphen mit Verkehrswegeknoten-Attributen abgelegt. Die Verkehrswegeabschnitte sind als einzelne Wegesegmente gespeichert, im folgenden einfach als Segment bezeichnet.
Die jeweiligen Segmente sind mindestens durch einen 1. und einen 2. Wegepunkt definiert. In bestimmten Fällen kann es erforderlich sein einen oder mehrere Zwischenkoordinaten (3. Wegepunkt) zu definieren, um das Segment eindeutig zu bestimmen oder dieser Zwischenposition bestimmte Aktivitäten zuzuordnen. Die Koordinaten der Wegepunkte werden durch wenigstens einen Referenz- oder Bezugspunkt festgelegt, dessen Koordinaten genau bekannt sind. Im einfachsten Fall beschreibt ein Segment einen Verkehrswegeabschnitt zwischen zwei Abzweigungen, d.h. der einem Segment zugeordnete Verkehrswegeabschnitt weist keine Abzweigung auf. Durch die erfindungsgemäße straffe Definition von Verkehrswegeabschnitten in Form von Segmenten ist pro Segment sehr wenig Speicherplatz in der Datenbank der Dienstezentrale notwendig. Jedem Wegepunkt können akustische oder optische Benutzerhinweise, insbesondere zur Zielführung, zugeordnet sein.

Es wird eine neuartige Wegeleitsymbolik angewendet in welcher Abzweigungs- und Kreuzungsbereiche klassifiziert und in codierter Form definiert sind.

Prinzipiell kann die Wegweisung auf sechs Kategorien von Straßenkreuzungen bzw. Abzweigungen reduziert werden, wobei die sechste Kategorie den Zielpunkt definiert.
1. Sternkreuzung,
2. Doppelsternkreuzung,
3. Füßler, (z.B. Autobahnabfahrten),
4. Versetzte Kreuzung,
5. Kreisverkehr.
6. Ziel erreicht

Diese Kreuzungs- bzw. Abzweigungskategorien haben jeweils einen charakteristischen Aufbau, der vereinfacht in Form von Abzweigungsästen kodiert werden kann.

Zur Definition einer Kreuzung bzw. Abzweigung muß dann lediglich die Kategorie der Kreuzung/Abzweigung angegeben werden, weiterhin welche möglichen Abzweigungsäste diese aufweist und schließlich welcher Ast dem zu fahrenden Weg entspricht. Diese Kodierung kann als Ziffernfolge ausgeführt sein. Ein derart definiertes Straßensegment kommt mit minimaler Datenmenge aus. Weiter unten wird dies noch ausführlich erläutert werden.

Nach Bestimmen der Startposition und Eingabe des Fahrtzieles wird nun durch die Dienstezentrale die jeweilige Startkoordinate und Zielkoordinate berechnet. Darauf wird die Koordinate des 2. Wegepunktes wenigstens eines zur Startkoordinate nächstliegenden Segmentes ermittelt und als aktuelle Anfangsposition (Fangpunkt) definiert von dem aus eine Fahrtroutenplanung erfolgen kann.

In gleicher Weise wird die Koordinate des 1. Wegepunktes wenigstens eines zur Zielkoordinate nächstliegenden Segmentes ermittelt und als Absetzpunkt definiert.

Die Sequenz von Segmenten zwischen Fangpunkt und Absetzpunkt kann nun in der Dienstezentrale festgelegt werden, wobei vom Benutzer festlegbare Kriterien wie z.B. Fahrtzeit oder Streckenlänge berücksichtigt werden.

Gerade in Stadtgebieten und Ballungszentren kann es vorkommen, daß mehrere geeignete Fangpunkte ermittelt werden, und mehrere sich unterscheidende Fahrtrouten berechnet werden. Es wird ein Sammelpunkt definiert, an welchem die ermittelten mögliche Fahrtroute zusammentreffen und sich gemeinsam zum ermittelten Absetzpunkt fortsetzen.

Im folgenden wird die Neuerung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Neuerung hervor.

Dabei zeigt:
- Figur 1:: Eine schematische Darstellung der benötigten Komponenten zur Ausübung des Verfahrens im Beispiel;
- Figur 2:: Eine schematische Darstellung des Aufbaus eines Wegesegmentes;
- Figur 3:: Beispiel zum Prinzip der Routenplanung/Zielführung;
- Figuren 4A-4F:: Schematische Darstellung der verschiedenen Wegweisungstypen.
- Figuren 5 bis 7:: Schematische Darstellung des Verfahrensablaufs von der Zieleingabe bis hin zur Zielführung;

Das Ausführungsbeispiel beschreibt das erfindungsgemäße Routenplanungs- und Zielführungssystem unter Anwendung eines GSM-Mobilfunknetzes und eines GPS- bzw. DGPS-Ortungssystems.

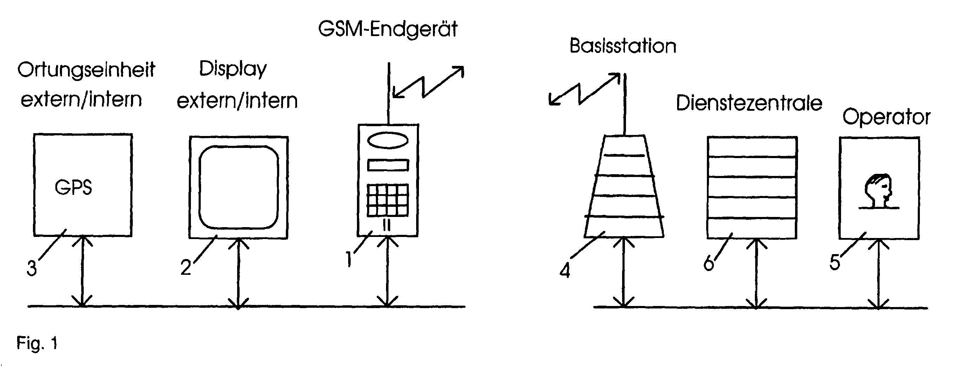

Figur 1 zeigt, wie ein System zur Nutzung des erfindungsgemäßen Zielführungsdienstes unter GSM aufgebaut sein kann. Prinzipiell werden dabei die vorhandenen Einrichtungen eines GSM-Mobilfunknetzes genutzt. Außer einem speziellen Verkehrstelematik-Endgerät, einem Ortungssystem und entsprechenden Einrichtungen in der Dienstezentrale sind im wesentlichen keine zusätzlichen Hardwareinstallationen notwendig. Evtl. können Stützsensoren für das Ortungssubsystem vorgesehen sein

Ein wichtiges Element ist das Endgerät 1, welches als fest eingebautes oder tragbares Gerät ausgeführt sein kann. Mit dem Endgerät 1 kann der Benutzer die unter GSM angebotenen Dienste nutzen. Einer dieser Dienste ist das erfindungsgemäße Routenplanungs- und Zielführungssystem für Fahrzeuge. An dieses Endgerät 1 ist optional ein Display 2 anschließbar, um eingehende Daten auch visuell anzeigen zu können. Das Display 2 kann auch direkt im Endgerät 1 integriert sein.

Zur Ortung des Teilnehmers, insbesondere in Fahrzeugen, ist weiterhin ein Ortungssystem 3, im Beispiel ein GPS bzw. DGPS-System, mit dem Endgerät 1 verbindbar, welche Positions- und Richtungsdaten des Fahrzeugs an das Endgerät weitergibt. Das Ortungssystem 3 kann auch bereits im Endgerät 1 integriert sein.

Eine Basisstation 4 des Mobilfunknetzes empfängt die vom Endgerät kommenden Daten und leitet diese an eine übergeordnete Dienstezentrale 6 weiter. Die Zentrale 6 hat unter anderem die Aufgabe, die vom Benutzer bzw. dem Ortungssystem eingehenden Positionsdaten auszuwerten, daraus einen Routenplan zu erstellen und die Zielführung und alle damit verbundenen Aufgaben zu koordinieren und kontrollieren.

In der Zentrale ist in einer Datenbank ein digitales Wegenetz abgelegt, wobei einzelne Verkehrswegeabschnitte als Segmente abgelegt sind. Näheres dazu weiter unten.

Die Anwendung des Routenplanungs- und Zielführungssystems geht im wesentlichen folgendermaßen von statten:
1) Das Ziel wird von Teilnehmer über das Tastenfeld des Endgerätes 1 indirekt als Rufnummer vorgegeben und an die Zentrale 6 übermittelt.
   2a) Die Zentrale 6 ermittelt mit Hilfe eines Rufnummern-Adressverzeichnis die Zieladresse und dann über ein Straßen-Positionsverzeichnis die Zielkoordinaten der Zielposition, welcher einer zur Rufnummer zugehörigen Adresse entspricht. Das Ortungssystem ergänzt die Routenplanungsanfrage mit der Startposition, d.h. der aktuellen Position des Fahrzeugs.
   2b) Die Zielkoordinaten können ggf. auch direkt aus einem Rufnummern-Zielkoordinatenverzeichnis von der Zentrale entnommen werden, das vorbereitend berechnet wurde oder durch manuelle oder automatische Eingabe/Übergabe von Daten angelegt wurde.
   2c) Alternativ kann auch 2a) verwendet werden mit der Ergänzung, daß das Zielkoordinatenergebnis für weitere Anfragen nach Alternative 2) im Verzeichnis vermerkt wird. Im Verzeichnis wird zur Rufnummer ein Marker (Flag) gesetzt, der Alternative 2) aktiviert und bei Positionswechsel des Zielteilnehmers (z.B. durch Umzug) zurückgesetzt wird.
3) Dies führt (ggf. über Dialog Teilnehmer/Zentrale) zu einer erfolgreichen Routenplanung in der Zentrale oder zum Abbruch des Vorgangs.
4) Der Benutzer kann sich eine Benutzerzusammenfassung der geplanten Route auf dem Display 2 anzeigen lassen.
5) Bei Erfolg der Routenanfrage und auf Wunsch der Benutzers wird vom Status "Routenanfrage" in den Status "Zielführung" gewechselt.

Alternativ kann anstelle Punkt 1. zur Bestimmung der Zielposition ein Zusatzdienst mit Operator 5 des Mobilfunknetzes angerufen werden. Er ermittelt im Dialog mit dem Benutzer die gewünschte Zieladresse. Darauf werden in vorbeschriebener Weise die Punkte 2) bis 5) analog abgearbeitet werden.

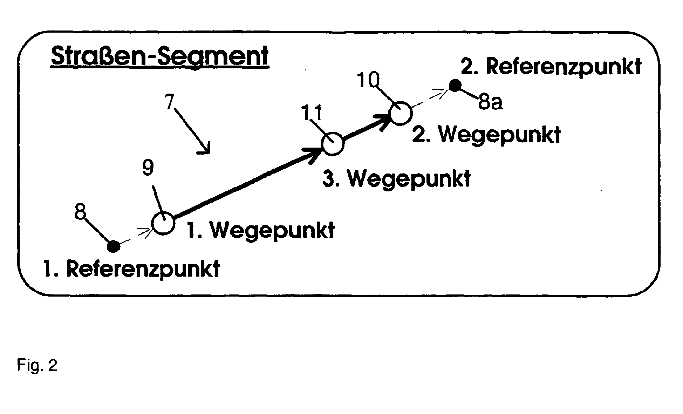

Figur 2 zeigt den prinzipiellen Aufbau eines Segments 7, die zur Beschreibung des Wegenetzes, bestehend aus einzelnen Wegeabschnitten, dienen, und die in digitaler, kodierter Form in der Datenbank der Zentrale abgelegt sind.
Die Lage des Segments wird durch mindestens einen ersten Referenzpunkt 8 bestimmt. Vorzugsweise ist zusätzlich ein zweiter Referenzpunkt 8a vorgesehen. Aufgrund der Referenzpunkte 8, 8a lassen sich sogenannte Wegepunkte definieren. Die Wegepunkte vom Typ Fangpunkt, Absetzpunkt und ggf. Sammelpunkt dienen als Grundlage zur Berechnung der Zielführungsroute. Die anderen Wegepunkte werden für die Berechnung der Zielführungsroute nicht benötigt, sondern später für die Generierung der Routenbeschreibung.

Ein erster Wegepunkt 9 dient der Erkennung, daß das Fahrzeug sich in einem bestimmten Segment in einer bestimmten Fahrtrichtung befindet.
Ein zweiter Wegepunkt 10 dient der Erkennung, daß das Fahrzeug im Begriff ist, ein bestimmtes Segment in einer bestimmten Fahrtrichtung zu verlassen.
Ein optionaler dritter Wegepunkt 11 dient der Erkennung, daß das Fahrzeug eine bestimmte Stelle des Segments 7 passiert. Dies dient z.B. dazu, im Endgerät positionsbezogenen Aktivitäten oder Befehle auszulösen.

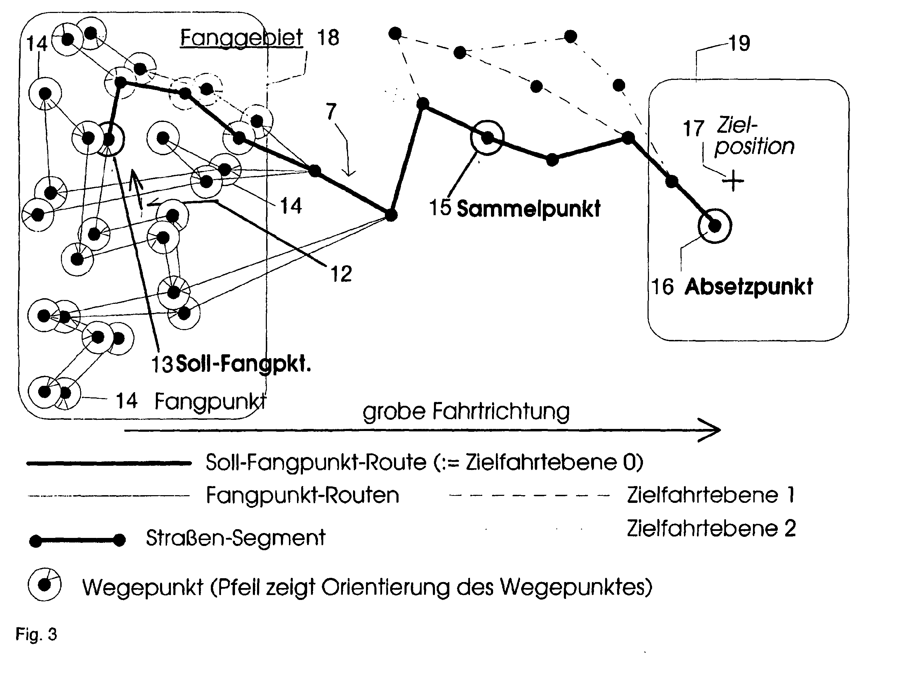

Figur 3 zeigt ein Beispiel für eine Zielführung nach erfolgreicher Routenplanung. Der Benutzer wird von der ermittelten Startposition per Richtungsführung zunächst zu einem sogenannten in Fahrtrichtung nächstliegenden Fangpunkt 13 (Soll-Fangpunkt) geführt. Dennoch bleibt offen, bei welchem Fangpunkt 13,14 das Endgerät zuerst auftaucht, d.h. welcher Fangpunkt 13,14 vom Endgerät 1 zuerst erkannt wird.

Von der Zentrale werden vorab mögliche Fangpunkte 13,14 berechnet, indem die 2. Wegepunkte 10 aller Segmente ermittelt werden, die sich in einem vorher definierten Gebiet um die Startposition befinden. Die möglichen Fangpunkte 13,14 liegen alle innerhalb eines Fanggebietes 18. Aus den ermittelten Fangpunkten wird der zur Startposition nächstliegende Fangpunkt als Soll-Fangpunkt 13 ausgewählt.
Aus der Zielposition 17 wird der Absetzpunkt 16 berechnet, indem die ersten Wegepunkte 9 aller Segmente 7 ermittelt werden, die sich in einem vorher definierten Gebiet um die Zielposition 17 befinden. Das ist der nächstliegende planbare Routenendpunkt.
Der Routenplaner in der Zentrale 6 berechnet vom Soll-Fangpunkt ausgehend eine Segment-Sequenz für die optimale Route zum Absetzpunkt. Diese Route wird bezeichnet als Soll-Fangpunkt-Route.
Aus der Lage der Fangpunkte und der Segment-Sequenz wird ein Sammelpunkt 15 berechnet, der auf der Soll-Fangpunkt-Route liegt.
Weiterhin berechnet die Zentrale von allen anderen möglichen Fangpunkten ausgehend eine Segment-Sequenz zum Sammelpunkt. Dies sind die alternativen Fangpunkt-Routen.

Die Fangpunkt-Routen werden mit der Soll-Fangpunkt-Route verglichen und verknüpft, wobei alle möglichen Routen durch den Sammelpunkt 15 führen und sich spätestens dort treffen. Es entsteht eine Zielführungswurzel, die eine Zielführung von allen möglichen Fangpunkten sicherstellt.
Aus dieser Zielführungswurzel wird eine Routenbeschreibung erstellt.
Wichtige Bestandteile der Routenbeschreibung sind:
a) Segmentdaten
b) Die Verkettung und Sequenz der Segmente
c) Wegepunktattribute
Die Benutzerzusammenfassung der Routenbeschreibung wird dem Benutzer auf dem Display 2 in Textformat angezeigt.

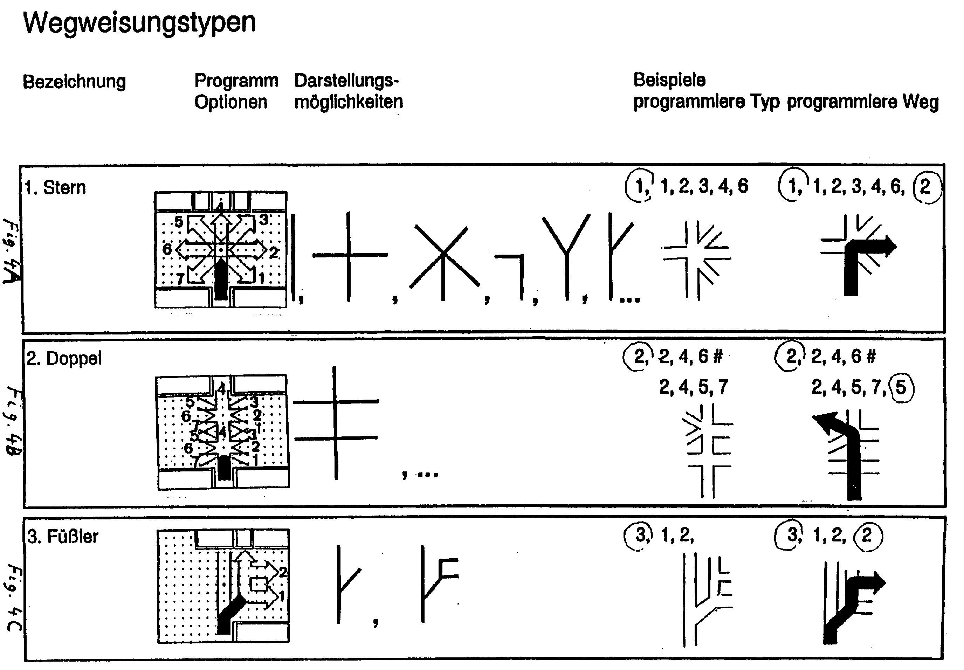

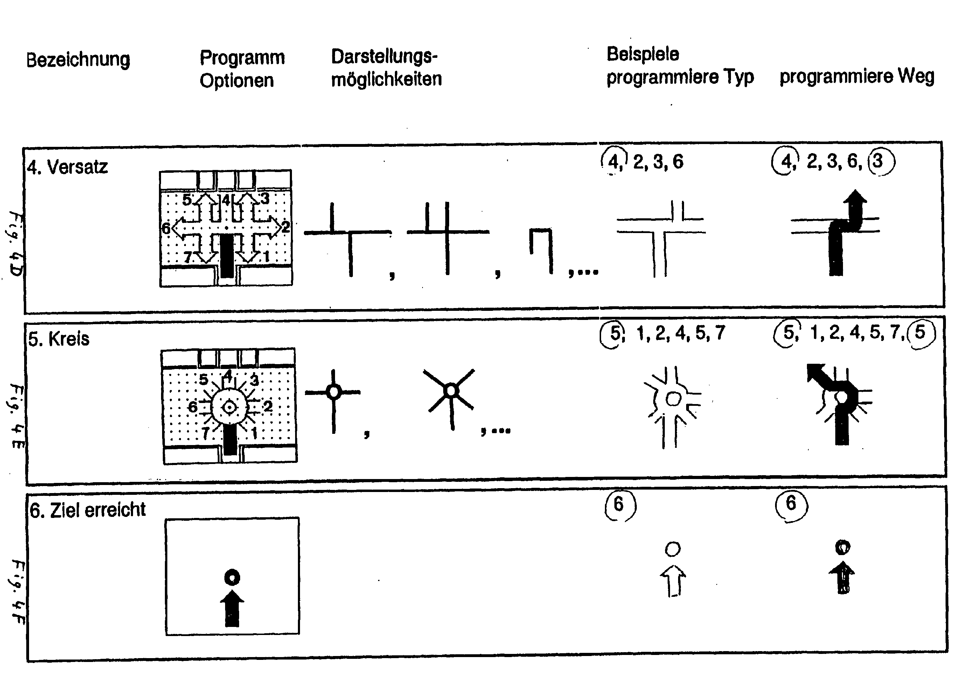

Für die Wegeleitung an Kreuzungen und Abzweigungen müssen die unterschiedlichen Typen von Kreuzungen und Abzweigungen in verschiedene Kategorien eingeteilt werden, und die möglichen Kategorien codiert in der Datenbank der Zentrale abgelegt werden. Beispiele hierfür zeigen die Figuren 4A bis 4F.

Die Analyse von Kreuzungs- und Abzweigungstypen ergab, daß sich diese auf 6 Kategorien reduzieren lassen:
1. Die Sternkreuzung (Figur 4A): Sie kann sternförmig aufgebaut sein oder nur Teile eines Sterns beinhalten, etwa in Form eines Kreuzes, Andreaskreuzes, Y-förmig, usw.
   Den Einfahrtszweig nicht dazugerechnet, kann die Sternkreuzung maximal 7 Abzweigungen aufweisen, wie in Spalte "Programm Optionen" gezeigt ist. Den möglichen Abzweigungen werden Ziffern von 1 bis 7 zugeordnet. Von den möglichen Abzweigungen sind aber oft nur eine oder wenige tatsächlich vorhanden (siehe Spalte "Darstellungsmöglichkeiten"). Die Spalte "programmiere Typ" zeigt, wie diese Art Kreuzung in der Datenbank als Ziffernfolge abgelegt wird. Die erste Ziffer gibt den Grundtyp der Wegeverzweigung an, im Beispiel Typ Nr. 1. Die folgenden Ziffern geben an, welche von den maximal 7 möglichen Abzweigungen vorhanden sind, im Beispiel die Abzweigungen Nr. 1,2,3,4 und 6. Der einzuschlagende Weg wird programmiert, indem als letzte Ziffer die Nummer der zu fahrenden Abzweigung angegeben wird, im Beispiel Nr. 2 (siehe Spalte: "programmiere Weg").
2. Die Doppelsternkreuzung (Figur 4B): Hier folgen zwei Stemkreuzungen sehr dicht aufeinander, wobei aber definitionsgemäß immer erst bei der zweiten Kreuzung abgebogen wird. Die Abzweigungen jeder der beiden Kreuzungen werden wiederum von 1 bis 7 durchnumeriert, wobei nicht alle Abzweigungen vorhanden sein müssen. Die Programmierung erfolgt wie unter Punkt 1 erläutert, wobei die Ziffernblöcke welcher jeweils die vorhandenen Abzweigungen der Kreuzungen angeben durch ein Trennzeichen (hier: #) getrennt werden.
3. Der Füßler (Figur 4C): Diese Form der Abzweigung findet man hauptsächlich bei Autobahnabfahrten. Sie zweigt in mehr oder weniger spitzem Winkel von der Hauptroute ab. Diese Abzweigung kann sich in zwei oder mehrere weiter Abzweigungen unterteilen. Darstellung und Programmierung erfolgt nach dem oben erläuterten Prinzip.
4. Versatz (Figur 4D): Es handelt sich hierbei um eine versetzt angeordnete Kreuzung, sozusagen um zwei oder drei ineinander verschachtelte Kreuzungen. Darstellung und Programmierung erfolgt nach dem oben erläuterten Prinzip.
5. Kreis (Figur 4E): Hier handelt es sich um einen Kreisverkehr mit bis zu 7 Abzweigungen. Darstellung und Programmierung erfolgt nach dem oben erläuterten Prinzip.
(6). Ziel erreicht (Figur 4F): Mit diesem Symbol wird der Fahrer in der nähe des Ziels aus der Wegeleitung entlassen. Die Kodierung erfolgt einfach mit einer Ziffer Nr. 6.

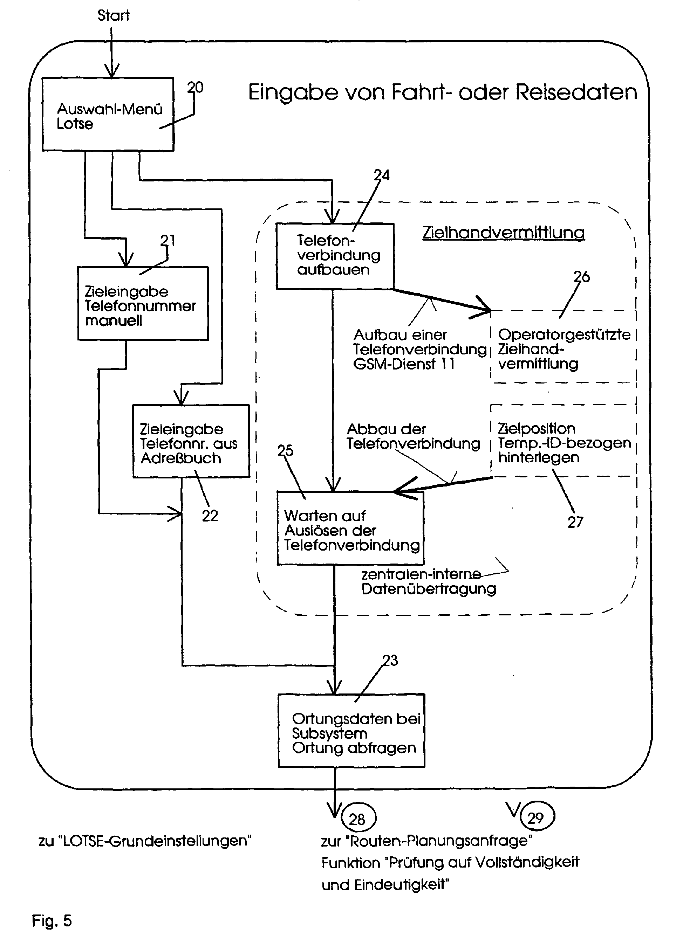

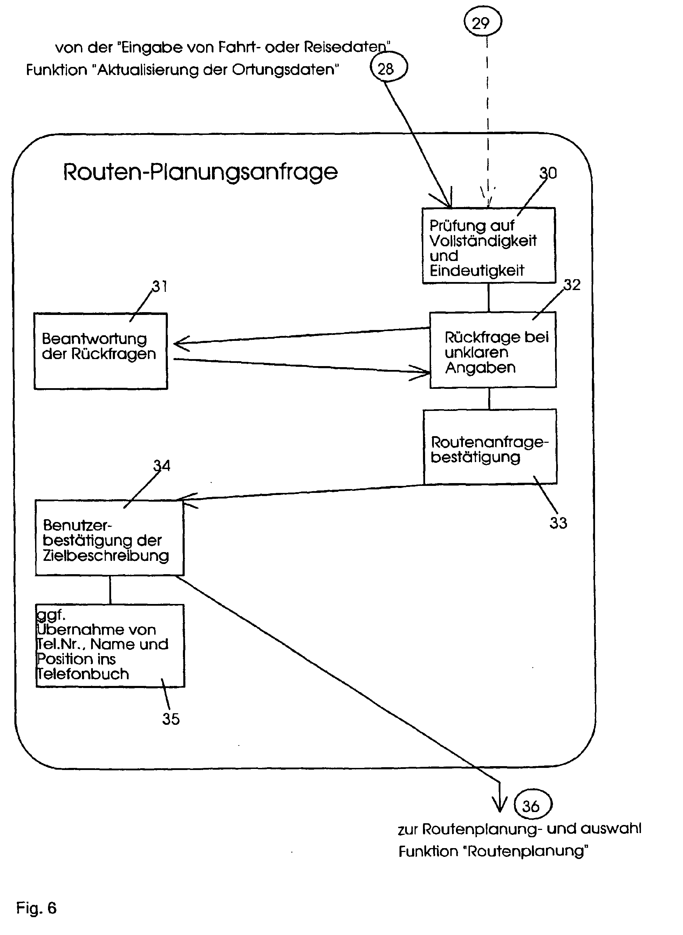

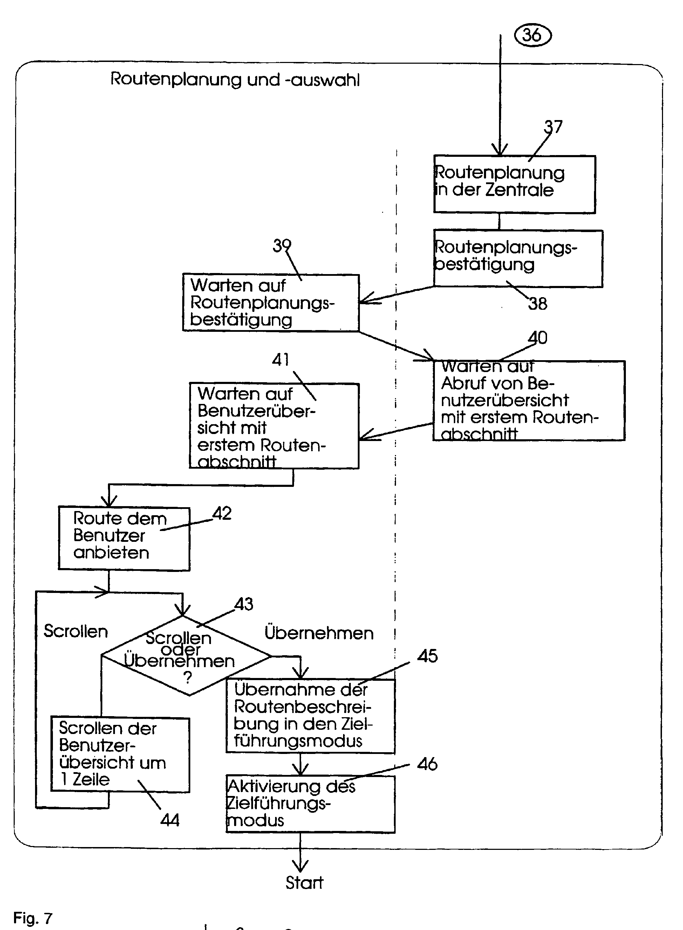

Ein Beispiel für den Ablauf der Routenplanung zeigen die Figuren 5 bis 7.

Ein Auswahlmenü (20) im Endgerät 1 ermöglicht es dem Benutzer eine manuelle, indirekte Zieleingabe auf dem Tastenfeld des Endgerätes 1 vorzunehmen (21). Alternativ ist es möglich die Zieleingabe aus einem Rufnummemspeicher Endgerätes zu übernehmen (22). Die Daten der Zieleingabe werden ergänzt durch Ortungsdaten des Ortungssystems (23).
Ist die Rufnummer des Ziels nicht bekannt, so besteht die Möglichkeit einer Zielhandvermittlung. Dazu wird eine Telefonverbindung zum Operator 5 aufgebaut (24), der eine Zielhandvermittlung im Dialog mit dem Benutzer vornimmt (26) und die Zielposition unter der Identität (ID) des Benutzers temporär in der Zentrale 6 ablegt (27). Die ID wird über das Zusatzdienstmerkmal CLI (Calling Line Identification) ermittelt. Für den Fall, daß dieses Merkmal vom verwendeten Kommunikationsnetz nicht unterstützt wird, wird folgendes Verfahren zur automatischen Übertragung der ID zur Zielhandvermittlung angewendet. Am Ende des Gesprächs legt der Teilnehmer auf. Dies führt jedoch nicht zum Auslösen der Fernsprechverbindung, sondern das Endgerät sendet automatisch mit DTMF eine Teilnehmerkennung (z.B. MS_ISDN) zur Zielhandvermittlung, die bei der nachfolgenden Datenverbindung nochmals zur Zentrale übertragen wird. Damit kann die Zentrale den Bezug der Datenverbindung zum Ergebnis der Zielhandvermittlung, d.h. Zielposition, herstellen. Danach kann die Verbindung zum Operator ausgelöst werden (25).
Je nach Art der Zieleingabe werden die Daten vom Endgerät (28) oder direkt vom Operator zur Zentrale übermittelt (29).

In der Zentrale erfolgt eine Prüfung auf Vollständigkeit und Eindeutigkeit der übermittelten Daten (30). Sollte es Rückfragen geben (32) so können diese vom Benutzer beantwortet werden (31). Liegen alle Daten eindeutig vor, so erfolgt von der Zentrale eine Bestätigung (33) und Anzeige der Zieladresse. Der Benutzer wird nun zur Bestätigung der Zielbeschreibung aufgefordert (34). Auf Wunsch des Benutzers kann die Start- und Zielposition zur späteren Wiederverwendung im Endgerät gespeichert werden (35), (36).

In der Zentrale wird die Routenplanung durchgeführt (37) und bei erfolgreicher Routenplanung eine Bestätigungsmeldung an den Benutzer gegeben (38). Dieser bestätigt wiederum die Routenplanungsbestätigung (39), worauf die Benutzerzusammenfassung der Route zusammen mit dem ersten Teilstück der Routenbeschreibung zum Endgerät 1 übertragen wird (40). Das Endgerät wartet auf die ihm angeboten Route (41), (42). Der Benutzer kann durch eine Scrollfunktion die zur Anzeige aufbereitete Routenbeschreibung einsehen (43), (44), diese Überprüfen, und evtl. eine Altemativplanung anfordern.
Der Benutzer kann nun die vorgeschlagene Route annehmen (45) und damit den Zielführungsmodus aktivieren (46).

Nach erfolgreicher Zielführung - ein Abbruch durch den Benutzer oder die Zentrale ist jederzeit möglich - kann die Routenanfrage von neuem beginnen.

Die Zielführung kann drei Grundzustände einnehmen:
1. Planfahrt (genauer Zielfahrtebene 0): Planfahrt bedeutet planmäßige Zielführung ohne Zwischenfälle.
   Mit Hilfe einer Richtungsführung, die ohne Hilfe der Zentrale nur mit bekannter "Zielposition" und aktueller Fahrzeugposition abgewickelt wird, wird unter Angabe einer groben Richtungsanweisung der Benutzer mit seinem Fahrzeug zum nächsten Soll-Fangpunkt (Fangpunkt) und somit vom Absetzpunkt an den vorgegebenen Zielpunkt geführt.
   Mit der Routenführung wird das Fahrzeug auf der geplanten Soll-Route entlang der Segment-Sequenz geführt, solange der Benutzer nicht von dieser Route abweicht. Die einzelnen Segmente werden dabei sequentiell abgearbeitet, und die vorgegebene Position und Fahrtrichtung immer mit der aktuellen Position und Fahrtrichtung verglichen. Der Benutzer wird durch Text-, Symbol oder Sprachanweisungen auf der vorgegebenen Route gehalten.
2. Zielfahrt (genauer Zielfahrtebene >0): Weicht das Fahrzeug von der vorgegebenen Route (Zielfahrtebene 0) ab, so erfolgt ein Rückführen auf die Soll-Route ebenfalls mittels Zielführungswurzel, d.h. Routenbeschreibung, jedoch auf höheren Verkettungsebenen.
3. Umleitungsfahrt: Bei Verkehrsstörungen wird der Benutzer informiert und per Richtungsführung und/oder Routenführung auf einer Umleitungsroute geführt.
4. Richtungsführung: Wenn erkannt wird, daß die geplante Route und ggf. höhere Zielfahrtebenen unabsichtlich verlassen wurden oder durch Ortungsprobleme die aktuelle Position nur ungenau bekannt ist, wird auf Richtungsführung umgeschaltet.

## Patentansprüche

1. Verfahren zur Routenanfrage und Zielführung von Fahrzeugen unter Anwendung eines oder mehrerer Ortungsverfahren, eines in Form einzelner Wegesegmente in einer Zentrale elektronisch gespeicherten Wegenetzes und eines in der Zentrale angesiedelten Routenplanungs- und/oder Optimierungsmoduls, wobei ein Mobilfunksystem, bestehend aus MobilfunkNetz und Mobilfunk-Endgeräten, zur Datenübermittlung zwischen Fahrzeug und Zentrale verwendet wird, daß auf Benutzeranfrage - unter Vorgabe einer Zieladresse - in der Zentrale eine Routenplanung stattfindet, wobei die Routenplanung nach anfrage- und/oder fahrzeug- und/oder benutzerindividuellen Optimierungskriterien erfolgt, wobei die vom Ortungssystem ermittelte Startposition des Fahrzeuges an die Zentrale übertragen wird, und von der Zentrale eine individuelle Routenbeschreibung generiert wird, welche zum Endgerät übertragen und dort weitgehend autark abgearbeitet wird, **dadurch gekennzeichnet,**
**daß** in der Zentrale eine Zielführungswurzel generiert wird, indem die Startposition des Fahrzeugs einem Fanggebiet zugeordnet wird, wobei anhand vorgegebener Kriterien alle in diesem Fanggebiet enthaltenen Fangpunkte ermittelt werden, und ausgehend von dem/den ermittelten Fangpunkten jeweils eine Wegesegment-Sequenz für jede mögliche Route zu einem aus der Zieladresse ermittelten Absetzpunkt berechnet wird, indem die einzelnen Wegesegmente mit Referenznummern bezeichnet werden und eine Verkettung und Sequenzierung der Wegesegmente zu einer Zielführungswurzel über die Referenznummern erfolgt, wobei die individuelle Routenbeschreibung aus der Zielführungswurzel und Zusatzinformationen generiert wird,
**daß** den einzelnen Wegepunkten der Wegesegmente Attribute zuweisbar sind, welche auf der ermittelten Fahrtroute liegende Wegekreuzungen, Wegeabzweigungen oder den Zielbereich (Absetzpunkt) definieren, und daß eine Wegeleitsymbolik zur Beschreibung und Darstellung der Wegekreuzungen, Wegeabzweigungen bzw. des Zielbereichs verwendet wird, in welcher die Wegekreuzungen, Wegeabzweigungen bzw. der Zielbereich, klassifiziert nach ihren verschiedenen Kategorien und Ausprägungen, in codierter Form abgelegt sind.

2. Verfahren nach Anspruch 1, **dadurch gekennzeichnet, daß** ein Wegesegement durch wenigsten zwei Wegepunkte definiert ist.

3. Verfahren nach einem der Ansprüche 1 oder 2, **dadurch gekennzeichnet, daß** die Koordinaten der Wegepunkte mit Hilfe wenigstens eines Referenzpunktes festgelegt werden, dessen Koordinaten genau bekannt sind.

4. Verfahren nach einem der Ansprüche 1 bis 3, **dadurch gekennzeichnet, daß** die Koordinaten der zweiten Wegepunkte aller in diesem Fangbereich enthaltenen Wegesegmente mögliche Fangpunkte darstellen, die nach vorgegebenen Kriterien bewertet werden, um daraus die Koordinaten eines Soll-Fangpunkts zu ermitteln.

5. Verfahren nach einem der Ansprüche 1 bis 4, **dadurch gekennzeichnet, daß** die vorgegebene Zieladresse einem definierten Zielbereich zugeordnet wird, wobei die Koordinaten der ersten Wegepunkte aller in diesem Zielbereich enthaltenen Wegesegmente nach vorgegebenen Kriterien bewertet werden, um daraus die Koordinaten eines möglichen Absetzpunkts zu ermitteln.

6. Verfahren nach einem der Ansprüche 1 bis 5, **dadurch gekennzeichnet, daß** ein Sammelpunkt definiert ist, durch welchen alle berechneten Wegesegment-Sequenzen führen oder sich spätestens dort treffen.

7. Verfahren nach einem der Ansprüche 1 bis 6, **dadurch gekennzeichnet, daß** die ermittelten möglichen Wegesegment-Sequenzen von der Zentrale zum Endgerät übermittelt werden und dort eine autarke Aufbereitung der Daten mit einer visuellen Anzeige oder akustischen Ausgabe der ermittelten Fahrtroute erfolgt.

8. Verfahren nach einem der Ansprüche 1 bis 7, **dadurch gekennzeichnet, daß** den einzelnen Wegepunkten der Wegesegmente Attribute zuweisbar sind, welche optische oder akustische Ausgaben für den Benutzer auslösen und/oder mögliche Aktionen des Endgerätes initiieren.

9. Verfahren nach einem der Ansprüche 1 bis 8, **dadurch gekennzeichnet, daß** durch Auswertung der aktuellen und jeweils letzten Positionsdaten des Ortungssystems die grobe Bewegungsrichtung des Fahrzeugs ermittelt werden kann.

10. Verfahren nach einem der Ansprüche 1 bis 9, **dadurch gekennzeichnet, daß** die Vorgabe der gewünschten Zieladresse indirekt durch Eingabe einer Rufnummer eines Kommunikationsnetzes in das Endgerät erfolgt, wobei die eingegebene Rufnummer an die Zentrale übergeben wird und dort die zur eingegebenen Rufnummer zugehörige Adresse ermittelt wird.

11. Verfahren nach einem der Ansprüche 1 bis 10, **dadurch gekennzeichnet, daß** die Zielvorgabe mittels Rufnummern durch Zugriffsmöglichkeit auf ein in der Zentrale abgelegtes elektronisches Telefonbuch unterstützt wird.

12. Verfahren nach einem der Ansprüche 1 bis 11, **dadurch gekennzeichnet, daß** zur Vorgabe der Zieladresse auf einen vorhandenen Rufnurnmernspeicher des Endgerätes zugegriffen werden kann, so daß darin gespeicherte Rufnummern direkt vom Zielführungssystem übernommen werden.

13. Verfahren nach einem der Ansprüche 1 bis 12, **dadurch gekennzeichnet, daß** die gewünschte Rufnummer zur Zielvorgabe durch Anruf eines Zusatzdienstes (Operator) ermittelt wird, wobei die ermittelte Rufnummer zur Weiterbearbeitung direkt an die Zentrale übergeben wird.

14. Verfahren nach einem der Ansprüche 1 bis 13, **dadurch gekennzeichnet, daß** in der Zentrale eine Überprüfung auf Eindeutigkeit und Vollständigkeit der vom Endgerät oder dem Zusatzdienst übergebenen Daten erfolgt.

15. Verfahren nach einem der Ansprüche 1 bis 14, **dadurch gekennzeichnet, daß** im Endgerät eine visuelle Anzeige oder eine akustische Ausgabe der ermittelten Zieladresse erfolgt.

16. Verfahren nach einem der Ansprüche 1 bis 15, **dadurch gekennzeichnet, daß** in einem benutzerspezifischen Rufnummernverzeichnis der Zentrale einmal ermittelte Startpositionen und Zieladressen zur künftigen Wiederverwendung gespeichert werden können

17. Verfahren nach einem der Ansprüche 1 bis 16, **dadurch gekennzeichnet, daß** Fehlfahrten automatisch erkannt werden und eine Rückführung auf eine der ermittelten Wegesegment-Sequenzen eingeleitet wird oder falls nötig eine Richtungsführung allein aufgrund der Daten des Ortungssystems stattfindet.

18. Verfahren nach einem der Ansprüche 1 bis 17, **dadurch gekennzeichnet, daß** eine Richtungsführung des Fahrzeuges - ohne Mitwirkung der Zentrale - aufgrund der ermittelten aktuellen Fahrzeugposition und Fahrtrichtung und einer nächsten bekannten Position möglich ist, insbesondere zur Wegfindung von der Startposition bis zum nächsten Fangpunkt, bei Abweichung von der vorgegebenen Route und zur Zielfindung nach Passieren des Absetzpunktes bis zum Endziel.

19. Verfahren nach einem der Ansprüche 1 bis 18, **dadurch gekennzeichnet, daß** mehrere Zielfahrtebenen vorgesehen sind, wobei die ermittelte Planroute der Zielfahrtebene =0 und aller weiteren möglichen, von der Planroute abweichenden Routen der Zielführungswurzel einer Zielfahrtebene >0 entspricht.

20. Verfahren nach einem der Ansprüche 1 bis 19, **dadurch gekennzeichnet, daß** dem Benutzer auf Wunsch laufend aktuelle Verkehrsmeldungen übermittelt werden.

21. Verfahren nach einem der Ansprüche 1 bis 20, **dadurch gekennzeichnet, daß** die Zusatzinformationen Informationen über Verkehrslage, Wetterlage etc. beinhalten.

## Claims

1. Method for route enquiry and guidance to destination in vehicles using one or more navigation methods, a network of roads electronically stored in the form of individual segments of roads in a control centre and a route planning and/or optimisation module located in the control centre, wherein a mobile communications system composed of a mobile communications network and mobile communications terminal devices for data transmission between the vehicle and the control centre is used so that at user request - specifying a destination address - route planning takes place in the control centre, wherein route planning ensues in accordance with optimisation criteria specific to the enquiry and/or vehicle and/or user, wherein the starting position of the vehicle determined by the navigation system is transmitted to the control centre and the control centre generates an individual route description which is transmitted to the terminal device where it is worked through largely autonomously, **characterised in that** in the control centre a destination guidance matrix is generated by assigning the starting position of the vehicle to a catchment area, wherein on the basis of specified criteria all catchment points contained in this catchment area are determined and proceeding from the catchment point(s) determined a road segment sequence is calculated in each case for each possible route to a set-down point determined from the destination address **in that** the individual road segments are designated by reference numbers and chaining and sequencing of the road segments to form a destination guidance matrix via the reference numbers, wherein the individual route description is generated from the destination guidance matrix and additional items of information,
that attributes are assignable to the individual road points in the road segments which define road intersections, road branchings or the destination area (set-down point) located on the journey route determined and that a system of road guide symbols is used to describe and illustrate the road intersections, road branchings or destination area in which system the road intersections, road branchings or the destination area classified according to their various categories and characteristics are filed in coded form.

2. Method according to claim 1, **characterised in that** a road segment is defined by at least two road points.

3. Method according to any of claims 1 or 2, **characterised in that** the coordinates of the road points are established with the aid of at least one reference point whose coordinates are precisely known.

4. Method according to any of claims 1 to 3, **characterised in that** the coordinates of the second road points of all road segments contained in this catchment area represent possible catchment points which are evaluated according to specified criteria in order to determine from this the coordinates of a desired catchment point.

5. Method according to any of claims 1 to 4, **characterised in that** the specified destination address is assigned to a defined destination area, wherein the coordinates of the first road points of all road segments contained in this destination area are evaluated according to specified criteria in order to determine from this the coordinates of a possible set-down point.

6. Method according to any of claims 1 to 5, **characterised in that** a focal point is defined through which all calculated road segment sequences pass or at the latest meet there.

7. Method according to any of claims 1 to 6, **characterised in that** the possible road segment sequences determined are transmitted by the control centre to the terminal device where there ensues autonomous preparation of the data with a visual display or acoustic output of the journey route determined.

8. Method according to any of claims 1 to 7, **characterised in that** to the individual road points of the road segments attributes are assignable which trigger visual or acoustic outputs for the user and/or initiate possible actions on the part of the terminal device.

9. Method according to any of claims 1 to 8, **characterised in that** by evaluating the current or respective last positional data in the navigation system the rough direction of motion of the vehicle can be determined.

10. Method according to any of claims 1 to 9, **characterised in that** the specification of the desired destination ensues indirectly by inputting a dial number in a communications network into the terminal device, wherein the dial number entered is passed over to the control centre where the address associated with the entered dial number is determined.

11. Method according to any of claims 1 to 10, **characterised in that** the specification of destination by means of dial numbers is assisted by the possibility of accessing an electronic telephone book filed in the control centre.

12. Method according to any of claims 1 to 11, **characterised in that** for specifying the destination address access may be made to a dial number memory present in the terminal device so that dial numbers stored therein can be taken over directly by the destination guidance system.

13. Method according to any of claims 1 to 12, **characterised in that** the desired dial number for specification of destination is determined by calling an auxiliary service (operator), wherein the dial number determined is passed over directly to the control centre for further processing.

14. Method according to any of claims 1 to 13, **characterised in that** in the control centre a check is made of the unambiguousness and completeness of the data passed over by the terminal device or the auxiliary service.

15. Method according to any of claims 1 to 14, **characterised in that** in the terminal device a visual display or an acoustic output of the destination address determined ensues.

16. Method according to any of claims 1 to 15, **characterised in that** in a user-specific dial number directory in the control centre starting positions and destination addresses which have been determined once can be stored for future reuse.

17. Method according to any of claims 1 to 16, **characterised in that** errors in journeys are recognised automatically and return to one of the road segment sequences determined is initiated or if need be directional guidance takes place solely on the basis of the data from the navigation system.

18. Method according to any of claims 1 to 17, **characterised in that** directional guidance of the vehicle - without participation of the control centre - is possible on the basis of the current vehicle position and travel direction determined and a nearest known position, in particular for finding the way from the starting position to the next catchment point, on departing from the specified route and for finding the destination after passing the set-down point up to the final destination.

19. Method according to any of claims 1 to 18, **characterised in that** a plurality of destination travel levels is provided, wherein the planned route determined for destination travel level = 0 and for all other possible routes of the destination guidance matrix deviating from the planned route corresponds to a destination travel level > 0.

20. Method according to any of claims 1 to 19, **characterised in that** current traffic bulletins are continuously transmitted to the user on request.

21. Method according to any of claims 1 to 20, **characterised in that** the additional items of information contain information about the traffic situation, weather conditions, etc.

## Revendications

1. Procédé de demande d'itinéraire et de guidage de véhicules à l'aide d'un ou plusieurs procédés de localisation, d'un réseau routier mis en mémoire électroniquement dans un central sous forme de segments de route individuels, et d'un module de planification et/ou d'optimisation d'itinéraire installé dans le central, étant précisé qu'un système de téléphonie mobile composé de terminaux du réseau mobile et de terminaux mobiles est utilisé pour la transmission de données entre le véhicule et le central et qu'à la demande de l'utilisateur - avec une adresse de destination prédéfinie - une planification d'itinéraire a lieu dans le central, la planification d'itinéraire se faisant selon des critères d'optimisation individuels propres à la demande et/ou au véhicule et/ou à l'utilisateur, la position de départ du véhicule déterminée par le système de localisation étant transmise au central et le central générant une description d'itinéraire individuelle qui est transmise au terminal et est traitée dans celui-ci de manière largement autonome,
**caractérisé en ce qu'**on génère dans le central une racine de guidage en affectant la position de départ du véhicule à une zone de captage, étant précisé qu'à l'aide de critères prédéfinis, tous les points de captage contenus dans cette zone de captage sont déterminés et qu'à partir du/des points de captage déterminés, une séquence de segments de route individuels est calculée pour chaque itinéraire possible pour former un point d'arrêt déterminé à partir de l'adresse de destination, grâce au fait que les segments de route individuels sont désignés par des numéros de référence, et un chaînage et une séquentialisation des segments de route ont lieu pour former une racine de guidage par l'intermédiaire des numéros de référence, la description d'itinéraire individuelle étant générée à partir de la racine de guidage et d'informations supplémentaires,
**en ce que** des attributs qui définissent des intersections, des bifurcations ou la zone de destination (point d'arrêt) situées sur l'itinéraire déterminé peuvent être affectés aux points de route individuels des segments de route, et
**en ce qu'**on utilise pour décrire et présenter les intersections, les bifurcations ou la zone de destination des symboles de signalisation routière qui contiennent sous forme codée lesdites intersections, bifurcations ou la zone de destination classées selon leurs différentes catégories et caractéristiques.

2. Procédé selon la revendication 1, **caractérisé en ce qu'**un segment de route est défini par au moins deux points de route.

3. Procédé selon la revendication 1 ou 2, **caractérisé en ce que** les coordonnées des points de route sont fixés à l'aide d'au moins un point de référence dont les coordonnées sont exactement connues.

4. Procédé selon l'une des revendications 1 à 3, **caractérisé en ce que** les coordonnées des seconds points de route de tous les segments de route contenus dans cette zone de captage représentent des points de captage possibles qui sont évalués suivant des critères prédéfinis, afin de déterminer à partir de là les coordonnées d'un point de captage théorique.

5. Procédé selon l'une des revendications 1 à 4, **caractérisé en ce que** l'adresse de destination prédéfinie est associée à une zone de destination définie, les coordonnées des premiers points de route de tous les segments de route contenus dans cette zone de destination étant évalués selon des critères prédéfinis, afin de déterminer à partir de là les coordonnées d'un point d'arrêt possible.

6. Procédé selon l'une des revendications 1 à 5, **caractérisé en ce qu'**un point de rassemblement est défini, où toutes les séquences de segments de route calculées passent ou se rejoignent ultérieurement.

7. Procédé selon l'une des revendications 1 à 6, **caractérisé en ce que** les séquences de segments de route possibles qui sont déterminées sont transmises par le central au terminal, dans lequel a lieu un traitement autonome des données avec un affichage visuel ou une sortie acoustique de l'itinéraire déterminé.

8. Procédé selon l'une des revendications 1 à 7, **caractérisé en ce que** des attributs qui déclenchent des émissions optiques ou acoustiques pour l'utilisateur et/ou lancent des actions possibles du terminal peuvent être affectés aux points de route individuels des segments de route.

9. Procédé selon l'une des revendications 1 à 8, **caractérisé en ce que** le sens approximatif de déplacement du véhicule est déterminé grâce à une analyse des données de position actuelles et des dernières données de position du système de localisation.

10. Procédé selon l'une des revendications 1 à 9, **caractérisé en ce que** la définition préalable de l'adresse de destination souhaitée se fait indirectement grâce à l'entrée d'un numéro d'appel d'un réseau de communication dans le terminal, le numéro d'appel entré étant transmis au central, dans lequel est déterminée l'adresse correspondant à ce numéro d'appel entré.

11. Procédé selon l'une des revendications 1 à 10, **caractérisé en ce que** la définition préalable de destination à l'aide de numéros d'appel est renforcée par la possibilité d'accès à un annuaire électronique stocké dans le central.

12. Procédé selon l'une des revendications 1 à 11, **caractérisé en ce que** pour prédéfinir l'adresse de destination, on peut accéder à une mémoire de numéros d'appel existante du terminal, de sorte que les numéros d'appel stockés dans cette mémoire sont repris directement par le système de guidage.

13. Procédé selon l'une des revendications 1 à 12, **caractérisé en ce que** le numéro d'appel souhaité pour prédéfinir la destination est déterminé grâce à l'appel d'un service supplémentaire (opérateur), le numéro d'appel déterminé étant transmis directement au central pour la suite du traitement.

14. Procédé selon l'une des revendications 1 à 13, **caractérisé en ce que** le caractère univoque et le caractère complet des données transmises par le terminal ou par le service supplémentaire sont contrôlés dans le central.

15. Procédé selon l'une des revendications 1 à 14, **caractérisé en ce qu'**un affichage visuel ou une émission acoustique de l'adresse de destination déterminée ont lieu dans le terminal.

16. Procédé selon l'une des revendications 1 à 15, **caractérisé en ce que** les positions de départ et adresses de destination qui ont été déterminées une fois dans une liste de numéros d'appel du central spécifiques pour l'utilisateur peuvent être mises en mémoire en vue d'une réutilisation future.

17. Procédé selon l'une des revendications 1 à 16, **caractérisé en ce que** les fausses routes sont détectées automatiquement et un retour à l'une des séquences de segments de route déterminées est amorcé, ou si nécessaire un guidage directionnel se fait uniquement à partir des données du système de localisation.

18. Procédé selon l'une des revendications 1 à 17, **caractérisé en ce qu'**un guidage directionnel du véhicule - sans le concours du central - est possible à partir de la position et de la direction actuelles déterminées du véhicule et d'une position connue suivante, en particulier pour trouver le chemin de la position de départ jusqu'au point de captage suivant en cas d'écart par rapport à l'itinéraire prédéfini, et pour trouver la destination après avoir passé le point d'arrêt, jusqu'à la destination finale.

19. Procédé selon l'une des revendications 1 à 18, **caractérisé en ce que** plusieurs plans de trajet de destination sont prévus, l'itinéraire déterminé correspondant au plan de trajet =0 tandis que tous les autres itinéraires possibles de la racine de guidage qui s'écartent de cet itinéraire correspondent au plan de trajet >0.

20. Procédé selon l'une des revendications 1 à 19, **caractérisé en ce que** sur demande, des messages actuels sur le trafic sont transmis en permanence à l'utilisateur.

21. Procédé selon l'une des revendications 1 à 20, **caractérisé en ce que** les informations supplémentaires contiennent des informations sur la situation du trafic, sur les conditions météorologiques, etc.
